# EUROPÄISCHE PATENTSCHRIFT

(11) **EP 0 420 030 B1**
(45) Veröffentlichungstag und Bekanntmachung des Hinweises auf die Patenterteilung: **30.07.1997**
(21) Anmeldenummer: 90118067.9
(22) Anmeldetag: 20.09.1990
(51) Int. Cl.: G06K 7/08, G06K 19/06

(54) **Streifencode sowie Verfahren und Vorrichtung zum Lesen eines solchen**
Bar code as well as procedure and device for reading such a code
Code à barres ainsi que procédé et dispositif de lecture d'un tel code

(30) Priorität: 23.09.1989 DE 3931828
(43) Veröffentlichungstag der Anmeldung: 03.04.1991
(73) Patentinhaber: Krieg, Gunther, Prof.Dr.Ing., D-76227 Karlsruhe (DE)
(72) Erfinder: Baldas, Otmar, D-7500 Karlsruhe (DE); Hanke, Andreas, D-7505 Ettlingen (DE); Krieg, Gunther, Prof. Dr., D-7500 Karlsruhe 41 (DE)
(74) Vertreter: Lempert, Jost, Dipl.-Phys. Dr. rer.nat.

(56) Entgegenhaltungen:
- EP-A- 208 157
- EP-A- 286 842
- DE-A- 2 244 602
- DE-A- 2 621 989
- FR-A- 2 361 703
- FR-A- 2 617 628
- US-A- 3 358 124
- US-A- 3 860 796
- US-A- 4 130 242
- US-A- 4 281 242

## Beschreibung

Die Erfindung betrifft ein Verfahren zum Lesen von Streifen- oder Barcodes nach dem Oberbegriff des Anspruchs 1, ein System bestehend aus einer Lesevorrichtung und einem Codeträger nach dem Oberbegriff des Anspruchs 7 sowie einen Codeträger nach dem Anspruch 20.

Optische Streifen- oder Barcodes sind bekannt. Sie bestehen aus einer Anzahl von schmalen und breiteren Strichen und Lücken, die parallel nebeneinander angeordnet sind. In der Regel beruht die Codierung einer Information in solchen Streifen und Lücken auf dem Binärprinzip.

Aus der gattungsgemäßen FR-A-26 17 628 ist ein System zum Lesen einer Code-Karte mit Binärcode bekannt. Dabei ist einseitig der Karte eine Erregerspule zur Erzeugung eines Wirbelfeldes in den Bereichen höherer elektrischer Leitfähigkeit der Code-Karte angeordnet, während auf der der Erregerspule gegenüberliegenden Seite der Karte zumindest eine Sensorspule angeordnet ist. Durch das angelegte Wechselfeld werden in den Bereichen höherer elektrischer Leitfähigkeit Wirbelströme erzeugt, welche die Spannung in der Sensorspule schwächen und so für einen Abschattungseffekt sorgen, durch den durch die Sensorspulen der Code der Code-Karte detektiert werden kann. Der Code wird dabei durch eng nebeneinander benachbarte Materialflecken oder Punkte gebildet, wodurch eine genaue Führung des Lesesystems längs einer definierten Spur sowie eine exakt winkelmäßige Ausrichtung zur Karte notwendig ist. Des weiteren weisen die Punkte sämtlich gleiche Größe auf, so daß lediglich eine binäre Information in Form einer logischen "1" oder "0" gewonnen werden kann, je nachdem, ob sich ein Materialfleck im Meßbereich befindet oder nicht. Die Gewinnung mehrwertiger Information ist nicht möglich.

Die US-A-4 130 242 weist ein System zum Speichern und Wiedergewinnen von Daten mit einem magnetischen Lesekopf auf, der zwei Pole hat. Zwischen den beiden Polen ist eine Aufnahme- oder Sensoreinheit vorgesehen, die ein magnetisches Teil mit einer Sensorspule beinhaltet, wobei das magnetische Teil direkt mit dem die beiden Pole bildenden Magnetkern verbunden sein kann. Es ist außerdem ein Codeträger in Form eines kartenförmigen Magnetträgers vorgesehen, der mehrere Doppelreihen von Flecken ferromagnetischen Materials enthält, wobei die Flecken einer Doppelreihe derart angeordnet sind, daß sie jeweils in einem Bereich unter dem Sensorkopf hindurchgeführt werden, der mittig zwischen einem der genannten Pole des Magnetkerns und dem Sensorkern liegt. Hierdurch werden die Flußlinien zwischen den Polen und dem Sensorkern beeinflußt. Befindet sich ein magnetischer Fleck im Meßbereich oder nicht, so werden binäre Signale in Form einer logischen "1" oder "0" detektiert.

Die US-A-4 281 242 betrifft eine Balance-Regelung für einen Magnetkopf, insbesondere einen U-förmigen Magnetkopf mit zentralem Sensorteil. Dabei handelt es sich um Magnetköpfe, die unter anderem auch zum Lesen von mit magnetischem Material versehenen Kreditkarten verwendet werden. Auch hier können lediglich binäre Signale in Form einer logischen "1" oder "0" detektiert werden. Die Balance-Regelung dient hierbei zur genauen Kompensation der mittels des Sensorteils gemessenen Spannungen.

Die EP-A-0 208 157 betrifft eine Einrichtung zum bewegungslosen Erkennen und Prüfen von Magnetschichtmedien durch an einem Luftspalt einer elektromagnetischen Wandleranordnung mit den Magnetschichtmedien hervorgerufene Magnetflußänderungen. Hierzu weist die Einrichtung einen H-förmigen Magnetkern mit Erregerspule und Sensorspulen zur Detektion von Induktionssignalen auf. Die Magnetschichtmedien sind dabei in Form eines ferromagnetischen Magnetstreifens auf einer Karte aufgebracht.

Die US-A-3 860 796 zeigt eine Code-Karte, auf der ferromagnetisches Material in binärer Code-Form aufgebracht wird. Dabei sind im Träger der Code-Karte Einkerbungen gleicher Größe eingebracht, die mit ferromagnetischen Teilchen gefüllt sind.

Der Erfindung liegt die Aufgabe zugrunde, ausgehend von dem bekannten Stand der Technik ein Verfahren und ein System zu schaffen, bei dem die Gewinnung mehrwertiger codierter Informationen mit größerer Toleranz möglich ist.

Erfindungsgemäß wird die genannte Aufgabe bei einem Verfahren gemäß Anspruch 1 gelöst. Die Aufgabe wird auch durch ein erfindungsgemäßes System nach Anspruch 7 gelöst. Ein erfindungsgemäßer Codeträger ist gemäß Anspruch 20 ausgestaltet.

Insgesamt wird also ein Verfahren und System zum induktiven Erkennen von Streifencodes geschaffen, die aus einem elektrisch leitenden, vorzugsweise metallischen Material bestehen. Die Lücken oder Zwischenräume zwischen den Streifen aus elektrisch leitfähigem Material bleiben als Lücken des vorzugsweise nicht leitenden dielektrischen Trägermaterials erhalten oder können mittels solchen Materials, das auch als Deckschicht verwendet wird, ausgegossen werden. Insbesondere muß auch die Deckschicht nicht aus transparentem Material bestehen, sondern kann lichtundurchlässig sein.

Da die Streifen aus para- oder diamagnetischem, leitfähigem Material, vorzugsweise Kupfer oder anderem gut leitendem Material bestehen, werden bei Einbringen eines Wechselfeldes über den Sendekopf in dieses Material in diesem Wirbelströme erzeugt, die das Magnetfeld schwächen. Statt dielektrischem Träger- und Abdeckmaterials kann auch ferromagnetisches Träger- und Abdeckmaterial vorgesehen werden, beispielsweise Edelstahl, insbesondere bei korrosiven Umgebungen; gegebenenfalls sind der eigentliche Träger und das Abdeckmaterial durch Isolierschichten von den Streifen zu trennen.

Während es grundsätzlich möglich ist, mit einem Erregerfeld und einem Sensorfeld zu arbeiten, ersteres erzeugt durch die Erregerspule auf einem Magnetkern und letzteres gemessen mittels einer Meßspule, sieht eine bevorzugte Ausgestaltung vor, daß zur Kompensation des Meßspulenstroms ein Referenzfeld mittels einer Referenzspule gemessen wird. Das Referenzfeld ist in der Regel ein Feldbereich, der durch den Streifencode praktisch nicht beeinflußt wird und wird entsprechend mit einer Referenzspule gemessen, die weiter von den Streifencodes liegt als die Meßspule, so daß das von ihr abgegebene Signal nicht beeinflußt wird. Die Referenzspule dient (bei Abwesenheit der zu messenden Streifen) zur Kompensation des Meßwechselfeldes bzw. zum Nullabgleich. Dieser kann rein mechanisch erfolgen, indem Meß- und Referenzspule mit Windungszahl und Anordnung auf dem Magnetkern derart ausgestaltet werden, daß bei Abwesenheit des Streifencodes die Ausgangssignale der Sekundärspulen auf Null abgeglichen werden, wobei diese einander gegengerichtet gekoppelt werden. Konkrete Ausgestaltungen sind in der Figurenbeschreibung beschrieben. Die Kompensation bzw. der Abgleich (für Abwesenheit von Streifencode) kann aber auch in Kombination mit elektrischen Maßnahmen oder rein elektronisch erfolgen; im ersteren Fall können in einem der beiden Zweige unterschiedliche Verstärker angeordnet sein bzw. Verstärkungsfaktoren wirken; es können Phasenschieber vorgesehen sein. Die Referenz- und Meßsignale werden einem Differenzverstärker zugeführt, dessen Ausgangssignal (bei Abwesenheit von Streifencodes) auf Null abgestimmt wird.

Die weiteren elektronischen Elemente der Verarbeitungsvorrichtung sehen vor, daß Einrichtungen zum Ausfiltern störender Gleich- und Oberwellenanteile (Bandpaß), ein Synchron-Demodulator bzw. eine Sample-Hold-Schaltung zur Gleichrichtung der Differenzspannungen und ein Tiefpaß oder ein äquivalentes Mittel zum Herausfiltern der Trägerfrequenz vorgesehen sind.

Das erhaltene gleichgerichtete reine Notsignal wird vorzugsweise mittels einer Spitzenwertdetektion, wie sie aus der DE-OS 36 01 083 bekannt ist und auf die ausdrücklich verwiesen wird und deren Offenbarungbsgehalt zum Gegenstand der vorliegenden Offenbarung gemacht wird, eingesetzt. Das sich ergebende TTL-Signal, das genau den Streifencode repräsentiert, kann dann in geeigneter Weise analysiert und demgemäß die im Streifencode enthaltene Information rückgewonnen werden.

Die Code-Streifenstruktur, beispielsweise mit wirksamen Cu-Streifen kann dadurch hergestellt werden, daß entsprechende Streifen auf einem Träger aufgelegt werden. Darüberhinaus kann ein gesamter zusammenhängender Streifencode in einem Vorgang aus einem entsprechenden Wandmaterial herausgestenzt werden. Weiterhin kann die entsprechende Struktur im Metallspritzverfahren auf einen Träger aufgespritzt werden, wobei die freizulassenden Bereiche durch eine Maske abgedeckt werden. Schließlich kann eine Herstellung von kaltverschweißten Cu-Strukturen im Grundmaterial durch Pressen und Sprengumformung erfolgen.

Wie schon gesagt, kann die wirksame (Cu-)Struktur ohne Abdekkung verwendet werden. Sie kann durch einen Kunststoff umschlossen sein. Weiterhin kann eine Abdeckung durch V2A-Blech erfolgen. Ein Träger kann ebenfalls V2A-Blech sein, so daß die wirksame (Cu-)Struktur zwischen zwei V2A-Blechen eingebracht werden kann. Schließlich kann ein Über- oder Umspritzen der Cu-Struktur mittels V2A durch Metallspritzverfahren erfolgen.

Die Aufbringung oder Verbindung der wirksamen Struktur kann kraftschlüssig, z.B. durch Klemmen erfolgen. Sie kann formschlüssig erfolgen, indem die Streifen in entsprechende Nuten eines Trägers, wie z.B. Stahl eingebracht werden. Es können auch andere lösbare oder nicht lösbare Halterungen, wie mittels einer geschraubten oder genieteten Abdeckung erfolgen. Die Abdeckung kann mit dem Träger verklebt werden. Die Materialien können mit oder ohne Zusatzwerkstoff verbunden werden, beispielsweise durch Löten, Schweißen, wie insbesondere Plasmaschweißung, durch Rollnaht, Laser- oder Elektronenstrahl.

Während auf einem Codeträger ein einzelner Streifencode zur Bildung einer Codekarte aufgebracht werden kann, kann zur Erhöhung des Informationsgehalts einer Codekarte diese mit mehreren nebeneinander angeordneten Codespuren versehen sein, die jeweils einen entsprechenden Teil der Höhe des Codeträgers einnehmen, wobei die Gesamtzahl durch die maximal mögliche Breite oder Höhe des Trägers und die minimal zulässige Breite der Codespur bzw. Höhe der einzelnen Streifen derselben bestimmt ist. Die nebeneinander angeordneten Codespuren können nacheinander ausgelesen werden (seriell). Es können auch alle oder ein Teil der Spuren einer Codekarte parallel in mehreren Sensoren, insbesondere auch im Multiplexverfahren eingelesen und anschließend elektronisch weiterverarbeitet werden.

In einer bevorzugten Ausgestaltung kann der Codeträger kreissymmetrisch ausgebildet sein, wobei die einzelnen Streifen durch Kreissektoren gebildet sind. Auch die Sensoren sind dabei vorzugsweise an die Codekartenstruktur angepaßt und damit als Kreissektoren ausgebildet.

Weitere Vorteile und Merkmale der Erfindung ergeben sich aus den Ansprüchen und aus der nachfolgenden Beschreibung, in der ein Ausführungsbeispiel unter Bezugnahme auf die Zeichnung im einzelnen erläutert ist. Dabei zeigt:
- Figur 1: eine Ausgestaltung eines Streifencodes;
- Figur 2: eine erste, prinzipielle Darstellung eines erfindungsgemäßen induktiven Sensors;
- Figuren 3-7: spezielle Ausführungsformen erfindungsgemäßer Sensoren bzw. Magnetkernen;
- Figur 8: eine schematische Darstellung zur Ausgestaltung eines stationären Sensors;
- Figur 9: einen die Sensoren der Figuren 2-7 aufnehmenden Sende-und Detektionskopfes;
- Figur 10: ein Blockschaltbild der Auswerteelektronik;
- Figur 11, (a - g): Darstellungen der im Zuge der elektronischen Verarbeitung anfallenden Signalformen;
- Figur 12: die Schaltung einer spannungsabhängigen inverten Verstärkers;
- Figur 13: ein weiteres Schaltungsdetail der erfindungsgemäßen Vorrichtung;
- Figur 14: eine weitere Blockschaltbild-Darstellung einer anderen Ausgestaltung eines Schaltungsteils;
- Figur 15: eine weitere blockbildartige Darstellung eines Schaltungsteils; und
- Figur 16: ein Blockschaltbild der elektronischen Auswerteeinheit für eine stationäre Anordnung gemäß der Figur 8.

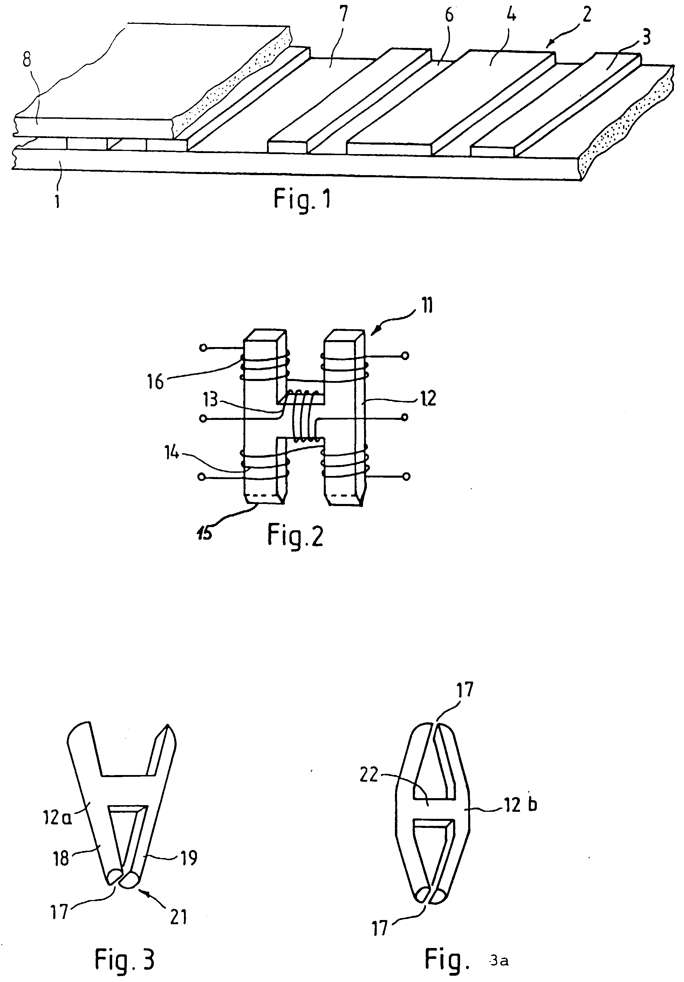

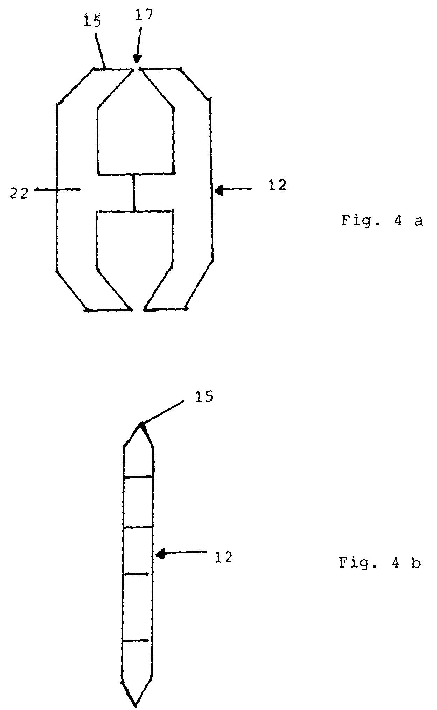

Die Figur 1 zeigt auf einem ebenen flächigen Codeträger 1 ein Streifen- oder Balkenmuster 2 (Barcode) mit Streifen 3,4 verschiedener oder dergleichen Breite, die durch Zwischenräume oder Abstände 6,7 ebenfalls verschiedener oder dergleichen Breite voneinander getrennt sind. Der Streifencode 2 ist weiterhin vorzugsweise durch eine Deckschicht 8 abgedeckt, die auch, ebenso wie das Material des Codeträgers 1, die Zwischenräume 6,7 ausfüllen kann.

Die Streifen 3,4 bestehen aus leitfähigem Material und zwar aus gut leitfähigem dia- oder paramagnetischen Material, wie Kupfer oder dergleichen.

Der Codeträger 1 und die Deckschicht 8 bestehen in der Regel aus nicht leitfähigem, also dielektrischem Material, wie insbesondere Kunststoff, der nicht durchsichtig sein muß.

In speziellen Anwendungen, insbesondere beim Einsatz in korrosiver Umgebung, kann bei den Streifen aus dia- oder paramagnetischem Material als Material für den Codeträger 1 und die Deckschicht 8 auch Edelstahl eingesetzt werden.

So kann eine Codekarte aus Trägerplatte 1,8 aus Edelstahl, Streifen oder Codebalken 3,4 aus Kupfer und zwischen diesen in Zwischenräumen eingelegten Edelstahlstreifen (nicht dargestellt) als "Codelücken" bestehen, wobei Kupfer in Edelstahlstreifen durch einen Stahlrahmen (nicht dargestellt) gehalten werden. Eine solche Anordnung kann durch Verschweißen oder Verbördeln fest verbunden sein, so daß eine solche Codekarte höchsten mechanischen, chemischen und thermischen Anforderungen genügt.

Die Auflösung oder Lesegenauigkeit wird durch die geometrischen Größen mitbestimmt. Die Schichtdicke der Codelinien wird vorzugsweise im Bereich von 20 bis 100 Mikrometer gewählt. Die Breite der Streifen 3,4 und der Zwischenräume 6, 7 liegt vorzugsweise im Bereich von 0,5 bis 1 mm, kann aber auch bis zu 4 mm oder mehr betragen. Während das Trägermaterial weitgehend beliebig stark sein kann, sollte die Deckschicht 8 auf der Seite, auf der Sensorkopf aufgesetzt wird, im Bereich von 0,1 bis 2 mm liegen; bei einer kartenartigen Streifenanordnung wird man auch das Trägermaterial in dieser Stärke wählen.

Die Länge der Streifen 3,4 ist weitgehend unkritisch; praktischerweise wird sie im Bereich von 1 bis 4 cm gewählt.

Die Herstellung des Streifencodes kann in beliebiger geeigneter Weise erfolgen. Die Streifen können aus dem entsprechenden Material ausgestanzt oder ausgeschnitten und anschließend beispielsweise in Kunststoff eingeschmolzen werden. Zur Herstellung kann Ätzen, wie es bei der Herstellung von Leiterplatten üblich ist, eingesetzt werden. Weiterhin können andere geeignete Dick- oder Dünnschichtverfahren oder auch Klebeverfahren je nach den verwendeten Materialien eingesetzt werden.

Die Figur 2 zeigt eine prinzipielle Darstellung eines erfindungsgemäßen Sensors 11. Der Sensor 11 weist einen Kern 12 aus ferromagnetischem Material auf. Dieser Magnetkern 12 trägt im dargestellten Ausführungsbeispiel drei Spulen 13, 14,16. Der Magnetkern 12 ist H-förmig ausgebildet. Zur Verkleinerung der Streuwirkung des magnetischen Feldverlaufes und einer Steigerung der räumlichen Auflösung, kann der H-Kern an einer (bzw. an beiden) Stirnseite(n) "zugespitzt" werden, indem er mit einem (Sattel-)Dach und einer entsprechenden (Sattel-)Kante 15 versehen ist, wie dies in Fig.2 dargestellt ist.

Auf dem H-Steg ist die Spule 13 als Erregerspule gewickelt. An der Erreger-Spule 13 wird eine hochfrequente Wechselspannung angelegt. Durch die beaufschlagte Erregerspule 13 werden zwei getrennte magnetische Kreise aufgebaut; die jeweils über die Stirnseiten benachbarter Schenkel des H-Kerns 12 geschlossen sind. Auf den zwei benachbarten Schenkeln des H-Kerns ist jeweils eine der Spulen 14,16 gewickelt, wobei eine der Spulen (hier 14) die Meßspule ist, während die Spule 16 eine Referenzspule ist. Durch das über die hochfrequente Wechselspannung in der Spule 13 erzeugte magnetische Wechselfeld wird wiederum in den Spulen 14,16 jeweils eine Spannung induziert, die bei Gegeneinanderschaltung der Spulen 14,16 auf Null abgeglichen wird.

Eine Verbesserung besteht darin, den groben Abgleich über Windungszahl und Spulenlage zu vollziehen und einen Feinabgleich über eine Aufaddierung eines in Amplitude und Phasenlage einstellbaren Korrektursignales durchzuführen.

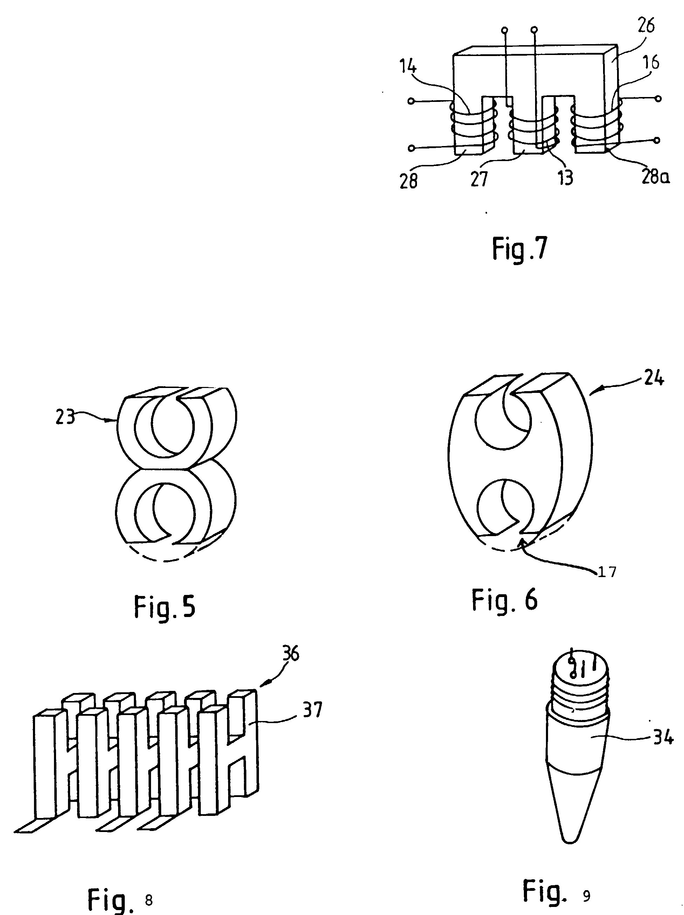

In der Figur 3 ist ein H-Kern 12a dargestellt, der grundsätzlich die Form eines auf dem Kopf stehenden A's besitzt, wobei aber die Seitenschenkel des A's im Bereich der zulaufenden Spitze einander nicht berühren, sondern einen Spalt 17 bilden. Die Schenkel 18,19 sind weiterhin im Querschnitt etwa halbkreisförmig ausgebildet, so daß der Spitzenbereich bei 21, insgesamt etwa einer Kreisfläche mit einem Durchmesser a ergibt.

Bei dem H-Kern 12b der Figur 3a sind nicht nur zwei benachbarte Schenkel zueinander hingeführt, wie dies bei der Figur 3 der Fall ist, sondern beide Schenkelpaare sind zueinander hin geführt, so daß also das "H" sich von seinem Mittelsteg 22 zu den Enden der Schenkel hin verjüngt. Auch hier sind die Stirnseiten des Magnetkerns wieder nahezu kreisförmig mit einem Schlitz 17 ausgebildet.

Die Figuren 4a und 4b zeigen eine weitere "H"-förmige Ausgestaltung eines Sensors. Die Schenkel sind ebenfalls, wie bei der Ausgestaltung der Figur 3a aufeinander zugerichtet, indem ihre Enden abgewinkelt sind. Darüberhinaus sind ihre Stirnseiten entsprechend der Ausgestaltung der Figur 2 "zugespitzt" und bilden eine Kante 15. Bei dieser Ausgestaltung werden Streufeldverluste zwischen den Schenkeln minimiert.

Weitere Formen für H-förmige Magnetkerne 23,24 sind den Figuren 5 und 6 zu entnehmen. Auch hier sind die freien Enden der Schenkel zueinander hingeführt, diesmal bogenförmig, so daß zwischen den freien Enden der Schenkel jeweils ein schmaler Luftschlitz gebildet ist. Eine andere Ausgestaltung eines Magnetkerns 26 ist in der Figur 7 dargestellt. Dieser Kern ist nicht H-förmig, sondern E-förmig ausgebildet, wobei der Magnetkern 26 derart eingesetzt wird, daß er auf den freien Enden seiner E-Schenkel steht. Die Erregerspule 13 ist um den mittleren E-Schenkel 27 gewickelt, während um einen seitlichen E-Schenkel 28,28a jeweils eine Sensorspule als Meß- bzw. Referenzspule 14,16 gewickelt ist. Dieser E-Kern 26 wird derart über den Streifencode geführt, daß der mittlere Schenkel 27 gerade über die Stirnkanten des Streifencodes geführt wird und der die Meßspule 14 tragende Schenkel 28 über die Streifen geführt wird, während der die Referenzspule 16 tragende Schenkel 28a neben den Streifen vorbeigeführt wird.

Während die vorgenannten Magnetkerne 12,12a,12b,23,24,26 relativ zu dem Streifencode 2 und zwar senkrecht zur Erstreckung der einzelnen Streifen 3,4 zu diesem bewegt werden, um den Streifencode zu lesen, wobei die genannten Kerne in einem Sende- und Detektionskopf 34 der Figur 9 oder einem ähnlichen Sende- und Detektionskopf untergebracht sein können, zeigt die Figur 8 eine Ausgestaltung, bei der Streifencode und damit der dieses tragende Träger sowie eine Anordnung 36 während der Messung bzw. des Lesens des Streifencodes relativ zueinander in Ruhe oder stationär gehalten werden. Aus diesem Grunde besteht die Anordnung 36 aus einer Vielzahl von Einzelsensoren 37, die entsprechend einem der vorgenannten Sensoren, vorzugsweise entsprechend einem der Sensoren der Figuren 2 bis 7, ausgestaltet sind. Die Abmessungen der H-förmigen Einzelsensoren 37 (es können auch E-förmige Einzelsensoren verwendet werden) senkrecht zu der das entsprechende Buchstabenbild wiedergebenden Ebene und der Abstand zwischen den Sensoren in der gleichen Richtung, entspricht den minimalen Streifen- und Zwischenraumdimensionen (der Streifen 3,4 bzw. Zwischenräume 7,6), wobei vorzugsweise, aber nicht notwendigerweise, die Streifencodes und Code-Zwischenräume oder -lücken ein ungerades Vielfaches der entsprechenden Streifen oder Lücken mit den geringsten Querabmessungen sind, damit die Einzelsensoren beidseitig eines Einzelsensors, der über einen breiten Lücke angeordnet ist, jeweils über Code-Streifen zu liegen kommen.

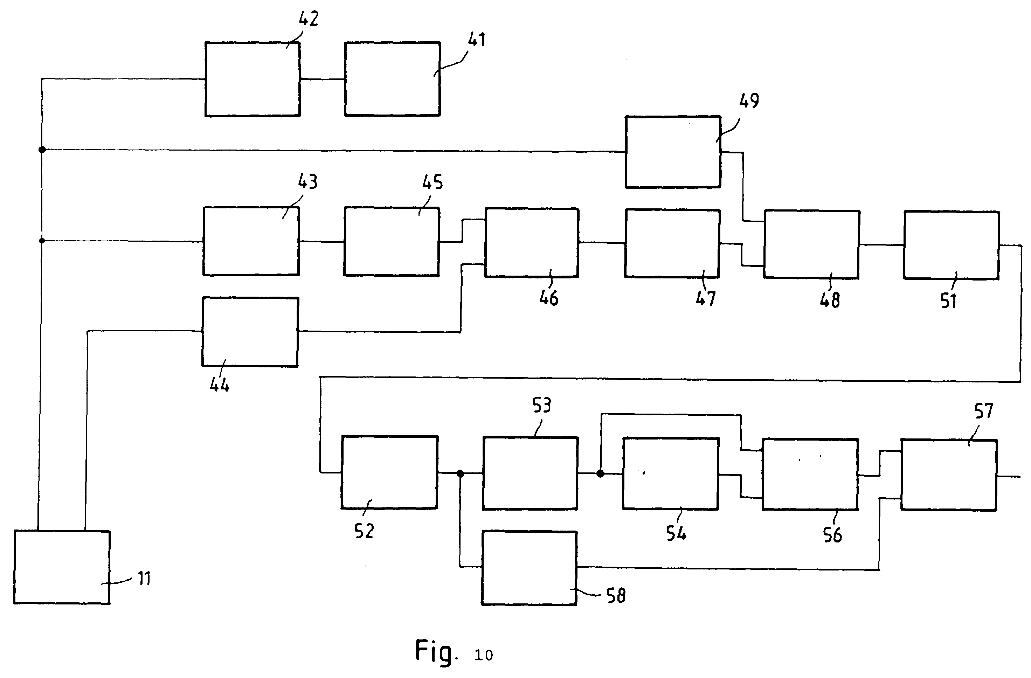

Die Elektronik (Fig.10) weist zunächst einen Oszillator 41 und einen diesem zugeordneten Sinusumsetzer 42 auf, mit dem das Oszillator-Signal in eine Sinuswelle umgesetzt wird. Die genannten Komponenten können durch einen Baustein NE 5521 der Firma Valvo oder einen entsprechenden Baustein verwirklicht sein. Alternativ kann als Oszillator ein LC-Oszillator, insbesondere nach Franklin, vorgesehen werden, der derart modifiziert ist, daß die Primärspule des Sensors 11 parallel zum Kondensator des LC-Oszillators geschaltet ist und die Induktivität des Oszillators bildet.

Es wird mit einer hohen Frequenz gearbeitet, wobei hierunter Frequenzen im Bereich von 5 bis 100 KHz verstanden werden. Im konkreten Ausführungsbeispiel wurde eine Frequenz von 58,8 KHz verwendet.

Die Amplitudenhöhe richtet sich nach der benutzten Betriebsspannung und beträgt beispielsweise bei einer Betriebsspannung von + 10 Volt ca. 6 V_{S}. Eine Erhöhung der Empfindlichkeit kann durch Betrieb der Spulen 13,14,16 in Resonanz durch Parallelschaltung geeigneter Kapazitäten erreicht werden.

Die in den Sekundärspulen 14,16 (Fig.2, 7) des Sensors 11 induzierten Sekundärspannungen (Meß- und Referenzspannung) werden gesondert über separate Verstärker 43,44 einem Addierer 45 zugeführt, wobei eine der Spannungen über einen Phasenschieber 46, gegebenenfalls in Form eines Allpasses, geführt wird, um einen Nullabgleich der Differenz beider der Spannungen bei Abwesenheit des betreffenden Streifencodes durchzuführen. Der Abgleich der Amplitude der Amplitutenwerte erfolgt zunächst durch Veränderung von Verstärkungsfaktoren in den verschiedenen Zweigen. Zusätzlich oder alternativ kann die Windungszahl in geeigneter Weise gewählt werden. Bei einem symmetrischen H-Kern werden die Windungen der Sekundärspulen 14,16 im wesentlichen gleich sein, während bei einer unsymmetrischen Ausgestaltung (Figur 3) die Windungszahlen zum Nullabgleich unterschiedlich gewählt werden. Soweit keine parasitären Kapazitäten vorhanden sind, ist die Phasenlage der Spannungen zueinander und zur Primärspule gleich Null. Wenn dies nicht der Fall ist, so muß eine Phasenkorrektur durch den Phasenschieber 44 vorgenommen werden. Grundsätzlich könnte ein Nullabgleich statt mittels eines Referenzsignals auch durch ein dieses vollständig elektronisch simulierendes Signal vorgenommen werden bzw. indem das Meßsignal der Sensor-/Meßspule 14 rein elektronisch bzw. ausgehend vom die Erreger-/Primärspule 13 beaufschlagenden Signal kompensiert wird. In diesem Falle könnte die Referenzspule 16 entfallen.

Das Ausgangssignal des Addierers 45 wird anschließend einem Bandpaß 47 zur Herausfilterung störender Gleich- und Oberwellenanteile zugeführt.

Statt des vorstehend erläuterten separaten Abgriffs der beiden Sekundärsignale von Referenz- und Meßspule kann auch vorgesehen sein, daß zunächst die Induktivität der Erregerspule 13 so gewählt werden, daß die die Sinusspannung liefernde Konstantspannungsquelle 41,42 nicht überlastet wird, was durch 150 bis 200 Windungen eines Kupfer-Lackdrahts mit einem Durchmesser von 0,05 mm erreichbar ist. Ist die Belastung nicht so groß, kann auf den Erregerschwingkreis und damit auf die der Erregerspule 13 parallel geschaltete Kapazität verzichtet werden. Hierdurch wird ein driftarmes, stabiles Eingangssignal erreicht.

Sekundärseitig können die beiden Spulen 14,16 auf Differenz, also gegeneinander, in Reihe geschaltet werden. Zu beiden wird parallel eine gemeinsame Kapazität zur Erzeugung eines Schwingkreises geschaltet. Bei dieser Beschaltung der Sensorspulen 14,16 kann die Differenzspannung nicht mehr elektrisch bzw. elektronisch, sondern ausschließlich mechanisch durch Verändern der Windungszahl und Verändern der Lage der Spule auf Null abgeglichen werden (bei Abwesenheit der Streifencodes). Bei Störung eines magnetischen Sekundärkreises wird die gesamte Induktivität so verändert, daß der ausgangsseitige Schwingkreis in Resonanz kommt; es ist eine hohe Empfindlichkeit gegeben. Bei dieser Beschaltung wird also bei Detektion, das heißt bei Störung des magnetischen Kreises durch Streifencodes, der Sekundärkreis mit Meß- und Resonanzspule 14,16 in die Resonanz hinein betrieben, wodurch das Driftverhalten gegenüber der oben genannten Schaltung, bei der bei Detektion in einem Kreis aus der Resonanz heraus die Differenzspannung erzeugt wird, reduziert wird.

Störende Einflüsse können hierdurch weitgehend ausgeschaltet werden.

Das abgeglichene Signal wird - gegebenenfalls nach weiterer Verstärkung - einem Synchron-Demodulator 48 (Multiplizierer) zur Gleichrichtung der Sekundär-Differenzspannung mittels des Primärsignals zugeführt. Je nach Art der Störung, die der Meßkreis der Meßspule 14 des Sensors 11 erfährt, ergibt sich eine andere Phasenlage zwischen Primär- und Differenzspannung. Da Voraussetzung der Synchron-Gleichrichtung Phasengleichheit oder Phasendifferenz von 180 Grad zwischen Primär- und Differenzspannung ist, muß eine weitere Phasenkorrektur zwischen Primär- und Differenzspannung erfolgen, wozu bei der dargestellten Ausführungsform ein Phasenschieber 49 im Kreis des vom Sinusansetzer 42 zugeführten Primärsignals vorgesehen ist. Der Phasenschieber wird vorzugsweise durch einen Allpaß gebildet.

Nach der Gleichrichtung wird schließlich die Trägerfrequenz mittels eines Tiefpasses 51 herausgefiltert. Diesem folgt ein invertierender, vorzugsweise spannungsabhängig verstärkender Verstärker 52.

Die weitere Verarbeitung des Ausgangssignals des Verstärkers 52 erfolgt über einen Differenzierer 53, einem spannungsabhängigen Phasenschieber 54 und in einer ersten Ausführungsform einem das nicht verschobene mit dem durch den Phasenschieber 54 verschobene Signal vergleichenden Komparator 56, dem ein UND-Gatter 57 nachgeschaltet ist, welches das Komparator-Signal in Abhängigkeit des Schaltzustandes einer vom nicht differenzierten Signal (Ausgang von 52) geschalteten Torschaltung 58 durchläßt. Das Auslaßsignal des UND-Gatters ist das gewünschte, dem Streifen 3,4 entsprechende TTL-Signal, das zur weiteren Auswertung und Erkennung der Signalabfolge weitergegeben werden kann, beispielsweise an einen Rechner.

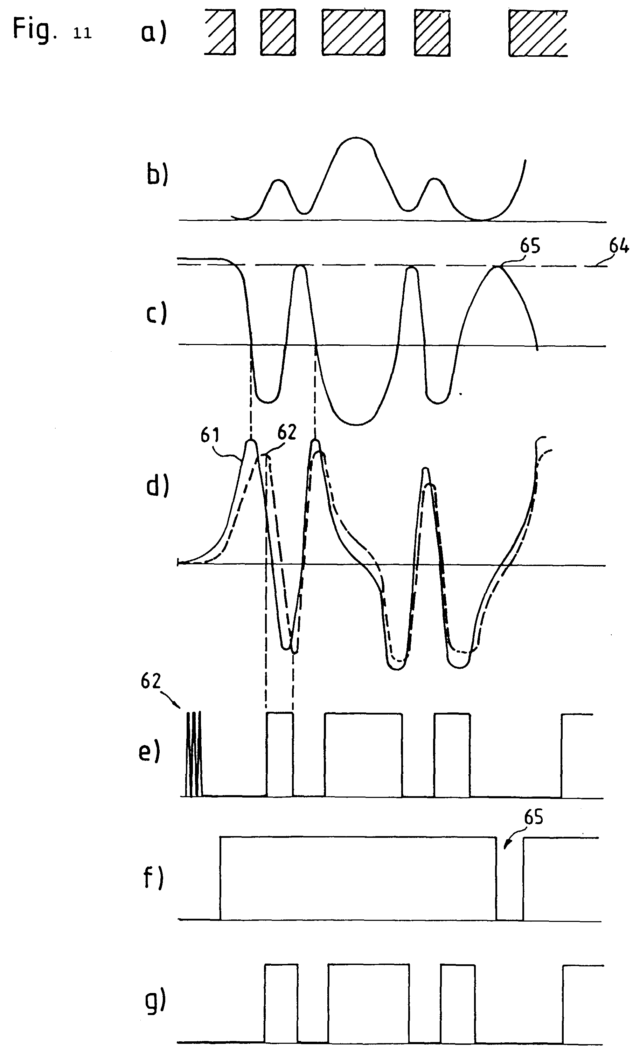

Der sich an wesentlichen einzelnen erfindungsgemäßen Komponenten der Fig.10 ergebende Signalverlauf ist in der Fig.11 dargestellt. Die Figur 11a zeigt schematisch eine Anordnung der elektrisch leitenden Streifen eines Streifen-Codes, wobei die schraffierten Balken den Kupferbahnen entsprechen.

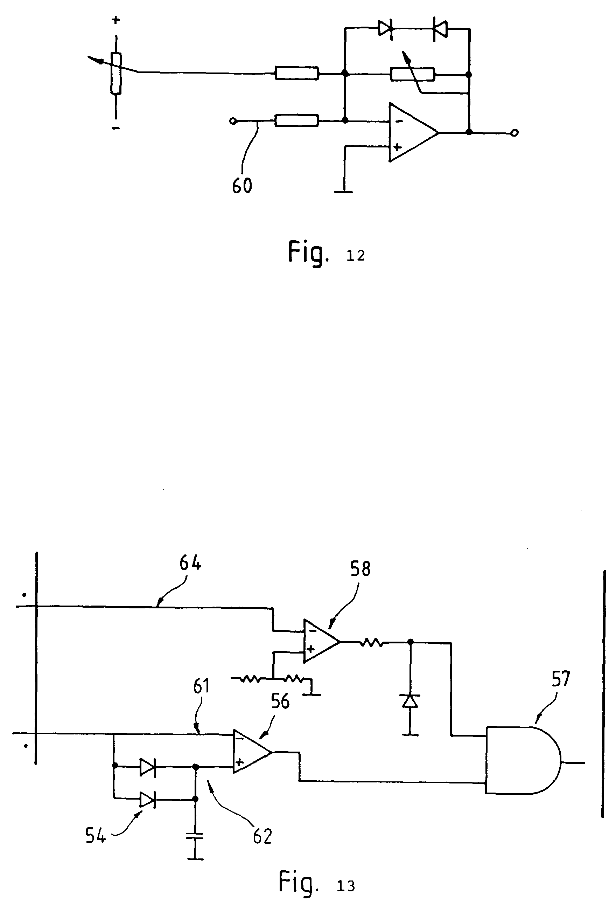

Die Aufnahme dieses Codes mit dem Sensor 11 ergibt eine den Streifencodes entsprechende, durch den Einfluß ihrer Leitfähigkeit modulierte Hochfrequenz- oder Trägerspannung, die durch den Synchrondemodulator 48 gleichgerichtet wird und deren Hochfrequenzanteil durch den Tiefpaß ausgefiltert wird, so daß sich hinter dem Tiefpaß 51 das in der Figur 12b dargestellte (Niederfrequenz-)Signal ergibt.

Wie aus der Figur 11b ersichtlich ist, erzielen die schmaleren Kupferbahnen gegenüber den breiteren eine deutlich schwächere Wirbelstromausbreitung und sind daher im Signal nach der Figur 11b nur als kleine schmale positive Spitzen zu erkennen. Da für die Weiterverarbeitung mit dem Differenzierer die Signal-Flanken des Signals der Figur 11b nicht sauber verarbeitet werden können, erfolgt über den invertierenden Verstärker 52 eine spannungsabhängige Verstärkung dahingehend, daß die schmalen Spitzen geringerer Höhe stärker verstärkt werden, also mehr angehoben werden als die breiten Spitzen, ohne daß letztere (nach Invertierung) in die negative Begrenzung gehen. Die Addition einer zusätzlichen Offset-Spannung unterstützt den gewünschten Effekt dadurch, daß in dem positiven Bereich eine sehr hohe Verstärkung erfolgt, während sie im negativen Bereich bis zur maximalen Ausgangsspannung (von minus 3,3 Volt) annähernd logarithmisch auf nahezu 1 zurückgeht.

Der spannungsabhängige invertierende Verstärker 52 liefert derart das Signal der Figur 11c.

Eine bevorzugte Schaltung für den Verstärker 52 ist in der Figur 12 dargestellt. Mit OP ist ein Operationsverstärker, z.B. ein solcher mit der Bezeichnung TL 084, mit D1 eine Siliziumdiode (z.B. 1 N 41 48) und mit D2 eine Zehnerdiode (z.B. ZPD 3,3) bezeichnet. Der vom Synchronmodulator bzw. dem nachgeordneten Tiefpaß 49 kommende Eingang 60 ist auf den negativen Eingang des Operationsverstärkers geführt, während der positive Eingang auf einem festen Wert liegt (Invertierung). Die spannungsabhängige Verstärkung erfolgt über D1, D2, während die Offset-Spannung durch das links angeordnete Potentiometer P einstellbar ist.

Das durch den Differenzierer 53 differenzierte Signal ist als Signal 61 in der Fig.11d dargestellt. In der gleichen Figur ist als phasenverschobenes Signal 62 das Ausgangssignal des spannungsabhängigen Phasenschiebers wiedergegeben.

Ein bevorzugter Aufbau eines spannungsabhängigen Phasenschiebers der Schaltung der Fig.10 ist der Fig.13 zu entnehmen, in der neben dem Phasenschieber 54 der nachgeschaltete Komparator 56 dargestellt ist. Der Phasenschieber 54 besteht aus zwei antiparallel angeordneten Dioden D3,D4, die mit einem Kondensator C zu einer RC-Kombination geschaltet sind.

Ist der Spannungsbetrag des Eingangssignals größer als ein vorgegebener Wert (beispielsweise 0,7 Volt), so ist eine der beiden Dioden leitend. Es ergibt sich ein geringer Durchlaßwiderstand. Die gebildete RC-Kombination ergibt eine geringe Phasenverschiebung zum Eingangssignal 61 (Fig.11c). Ist hingegen der Spannungsbetrag des Eingangssignals kleiner als der vorgenannte Spannungswert, so sperren beide Dioden. Es ergibt sich ein hoher Sperrwiderstand, so daß die RC-Kombination eine große Phasenverschiebung zum Eingangssignal 61 bedingt. Hierdurch werden die differenzierten Signale auch im Sattelbereich, wo sie nahezu parallel verlaufen, hinreichend weit auseinandergezogen, so daß sie sich nicht kreuzen und der Komparator 56 in diesem Bereich keine Schaltvorgänge durchführt, während in den Spitzenbereichen des differenzierten Signals die Phasenverschiebung gering ist. Das verschobene und das unverschobene Signal kreuzen sich nahe ihrer Maxima. In diesem Kreuzungspunkt schaltet der Komparator. Aufgrund der erzeugten geringen Verschiebung in diesem Bereich gibt der Schaltpunkt des Komparators 56 eine Flanke im Ausgangsstreifenmuster sehr genau wieder.

Der spannungsabhängige Phasenschieber 54 kann durch Auswahl und Anzahl der antiparallel gerichteten Dioden hinsichtlich des Spannungsbereichs, an dem eine Änderung der Phasenverschiebung einsetzt, verändert werden, während durch Reihenschaltung von Widerständen zu den Dioden die Phasenverschiebung in beiden Bereichen variiert werden kann.

Das Komparatorsignal ist in der Fig.11e wiedergegeben.

Gegenüber einer an sich möglichen Spitzenwertdetektion ergibt sich ein einfacherer Aufbau, eine sicherere Erfassung der positiven und negativen Spitzen, selbst wenn deren Werte oder Intensitäten stark schwanken; unerwünschte Schaltpunkte werden zuverlässig ausgeschlossen und eine Anpassung an die jeweiligen Problemstellungen ist leicht durchführbar.

Da die vorbeschriebene Phasenverschiebung in dem Falle, in dem überhaupt keine Decodierung erfolgt, ein unerwünschtes "Takten" des Komparators nicht vermeiden kann (wie bei 63 in Fig.11e angedeutet) und um in diesem Falle nicht die ganze Einrichtung jeweils abschalten zu müssen, kann die in der Figur 10 dargestellte Torschaltung 58 vorgesehen sein, mittels der das spannungsabhängig verstärkte und invertierte Analogsignal nach der Fig.11c mit einer festen, vorgebbaren Schwelle 64 verglichen wird, wobei der Komparator nur öffnet, wenn der (invertierte) Analogwert unterhalb der Schwelle liegt, während er schließt, wenn ein invertierter und gemäß obiger Erläuterung versetzter "Nullwert" des Signals oberhalb der Schwelle liegt, so daß er kein Ausgangs-Signal abgibt und damit das UND-Gatter in diesem Falle keiner Messung schließt. Wenn relative Maxima des (invertierten) Analogsignals nach Fig.11c die Schwelle überschreiten sollten, so daß der Komparator kein positives Signal abgibt, so liegt ein solcher Fall (bei 65 in Fig.11c und f) immer außerhalb der durch die Flanken bestimmten Peaks des Signals des Komparators 56, so daß dieser Fall zulässig ist und hierdurch keine Information ausgeblendet wird.

Das vom UND-Gatter 57 abgegebene TTL-Ausgangssignal ist in der Fig. 11g dargestellt. Dieses kann, wie gesagt, weiterverarbeitet werden, beispielsweise in einem Rechner.

Eine alternative Schaltung zur Verhinderung des Taktens des Komparators sieht vor, daß statt der Torschaltung zwischen spannungsabhängigem Phasenschieber und Komparator ein Addierer angeordnet ist, der dem spannungsabhängig phasenverschobenem Differenzsignal 62 eine negative Offset-Spannung überlagert, so daß auch die "Nullwerte" des unverschobenen und des phasenverschobenen Signals in ihren Werten (intensitätsmäßig) "auseinandergezogen" werden. In diesem Falle ist der spannungsabhängige Phasenverschieber durch einen Impedanzwandler abgeschlossen, dessen Ausgang das Eingangssignal des Addierers liefert (im einzelnen nicht dargestellt). In diesem Fall kann dann das TTL-Ausgangssignal des Komparators 56 unmittelbar zur Weiterverarbeitung verwendet werden.

Die weitere Verarbeitung des Signals der Figur 11c nach einem Verstärker 52 kann auch grundsätzlich durch Spitzenwertdetektion erfolgen, wie sie in der DE-OS 37 23 348 für ein optisches Barcode-Lesesystem erläutert ist, worauf ausdrücklich verwiesen wird. Das sich ergebende gewünschte, den Streifen 3,4 entsprechende TTL-Signal wird zur weiteren Auswertung und Erkennung der Signalabfolge, beispielsweise einem Rechner, weitergegeben. Der guten Ordnung halber sei erwähnt, daß die Verknüpfungsschaltung 38 der DE-OS 37 23 348 zur Unterdrückung des Einflusses der dort gelesenen einzelnen Matrix-Druckerpunkte vorgesehen war und die damit verbundenen Probleme hier nicht auftreten, so daß dieses Glied nicht erforderlich ist.

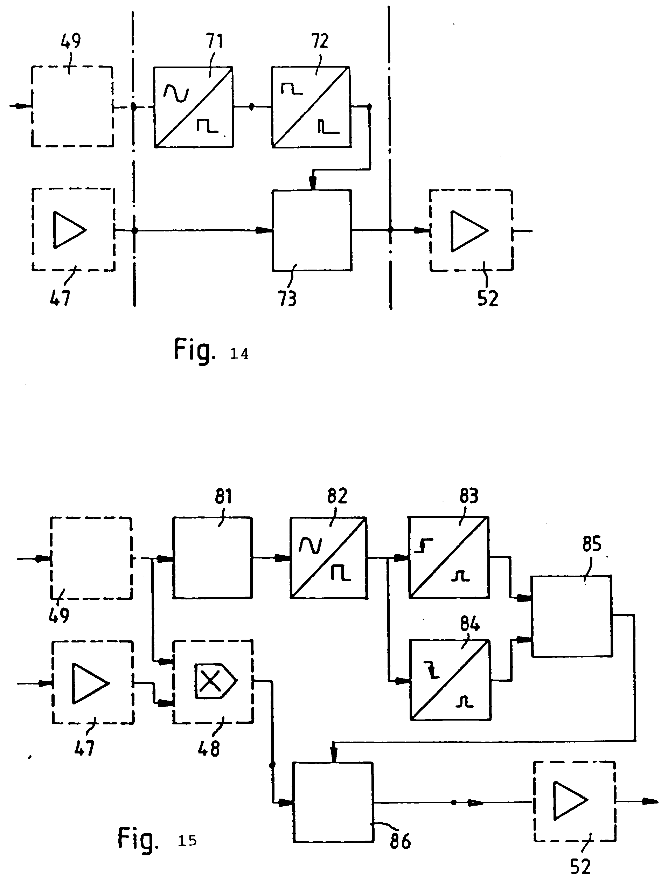

Der Synchrondemodulator 48 sowie die Tiefpaß 51 der Figur 10 können in der aus der Figur 15 ersichtlichen Weise durch einen Rechteckumsetzer 71, einen nachfolgenden retriggerbaren Monoflop 72 im Erregerstromkreis sowie eine Sample-und-Hold-Schaltung 73, die durch den Takt des Monoflops 72 getaktet wird, ersetzt werden. Das Ausgangssignal der Sample- und Hold-Schaltung 73 entspricht dem der Figur 11d.

Eine weitere Alternative besteht darin, die Synchrondemodulation der Figur 10 beizubehalten, aber die Tiefpassung dadurch zu ersetzen, daß das Erregersignal gegebenenfalls über einen weiteren Phasenschieber 81 relativ zum Meß- bzw. Differenzsignal korrigiert wird, sich wieder ein Rechteckumsetzer 82 im Erregerstromkreis und diesem nachfolgend eine Schaltung zur Frequenzverdopplung mit parallel zu einander angeordneten gegensinnig geschalteten Monoflops 83,84 sowie einem nachfolgenden Odergatter 85 zur Erzeugung des Takts für eine Sample-und-Hold-Schaltung 86 im Meßsignalkreis (Figur 15).

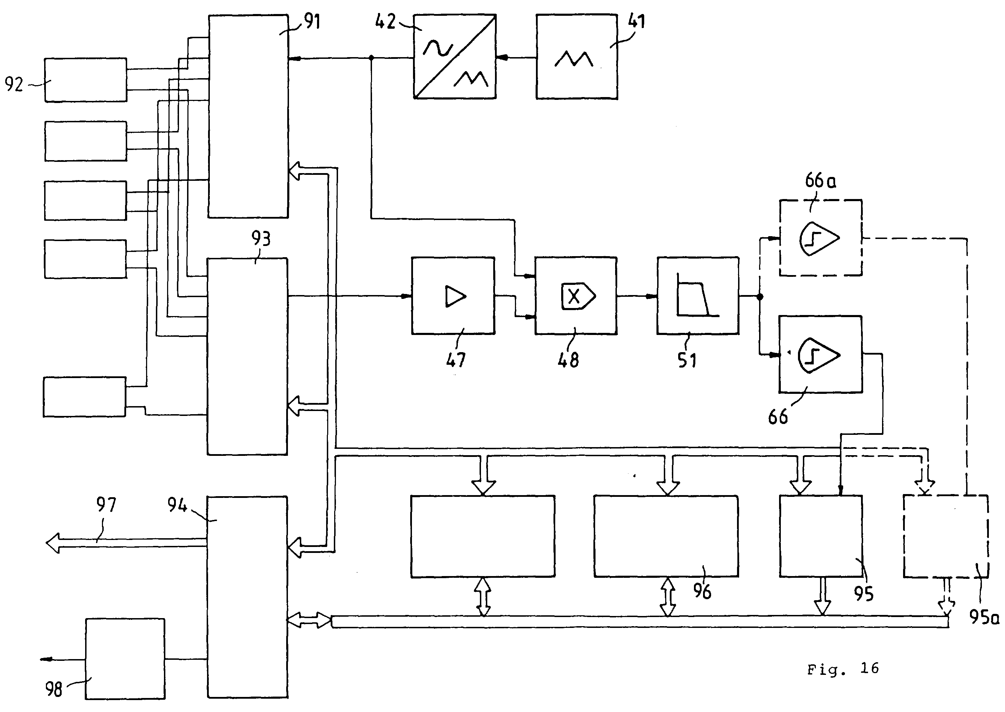

Bei einem statischen Sende- und Detektionskopf, wie er unter Bezugnahme auf Figur 8 oben erläutert wurde, werden die Einzelsensoren 37 mittels einer Multiplex-Schaltung (Fig.16) nacheinander auf ihren jeweiligen Zustand abgefragt. Hierzu ist im Erregerstromkreis dem Sinusumsetzer 42 ein Demultiplexer 91 nachgeordnet, der das Erregersignal nacheinander den einzelnen Sensorkernen 92 zuweist, während in entsprechender Abfolge die Meß- und gegebenenfalls Referenzspulen 14,16 der Einzelsensoren 92 durch den Multiplexer 93 abgefragt werden. Die Ablaufsteuerung erfolgt durch einen Mikroprozessor 94. Die weitere Verarbeitung der Signale erfolgt über den Verstärker 47, den Synchrondemodulator 48 sowie den Tiefpaß 51 bzw. eine der entsprechenden vorstehend erläuterten Ersatzschaltungen dieser Elemente. Da die Einzelsensoren während es Ablesens stationär über den Code-Streifen bzw. -Lücken gehalten sind, kann der Nullabgleich unmittelbar am Sensor (mechanisch) erfolgen. Die differenzierte Spannung wird in der vorstehend beschriebenen Weise (Schaltungsblöcke 66,95) dargestellt. Die entsprechenden digitalen Zustände der Einzelsensoren werden in einem Speicher 96 (RAM) abgelegt. Von hier sind sie über eine parallele oder serielle Schnittstelle 97,98 weiterverarbeitbar.

Im Fall einer stationären Sensoranordnung mit E-förmigen Sensorkernen befindet sich die Erregerwicklung, wie gesagt, auf dem mittleren Schenkel. Die Sekundärwicklungen auf den beiden äußeren Schenkeln müssen symmetrisch behandelt werden, so daß deren Schaltungsteile 66,95 an entsprechenden Flächen 66a,95a parallel geordnet sind. Es ist wesentlich, daß die Positioniergenauigkeit relativ zu dem Streifencode eingehalten wird, also einer der beiden äußeren Schenkel zusammen mit dem mittleren Schenkel über den Streifen, der andere aber außerhalb derselben angeordnet ist.

## Patentansprüche

1. Verfahren zum Lesen von durch Material unterschiedlicher elektromagnetischer Eigenschaften codierter Information, wobei ein elektromagnetisches Wechselfeld ausgesendet wird und ein durch das Material unterschiedlicher elektromagnetischer Eigenschaften beeinflußtes Magnetfeld detektiert wird, wobei ein Codeträger mit einem Code aus leitfähigem, para- oder diamagnetischen Material an einem Sende- und Detektionskopf vorbeigeführt und durch das elektromagnetische Wechselfeld im leitfähigen, para- oder diamagnetischen Material Wirbelströme erzeugt werden, dadurch gekennzeichnet, daß ein Streifencode aus mit vorgegebenen, aber unterschiedlichen Abständen angeordneten Streifen des leitfähigen, para- oder diamagnetischen Materials unterschiedlicher Breite an dem gemeinsamen Sende- und Detektionskopf vorbeigeführt wird, daß ein durch das leitfähige, para- oder diamagnetische Material geschwächtes Magnetfeld als Meß-Wechselfeld mit den Breiten der Streifen und ihren Abständen entsprechender unterschiedlicher Intensität gemessen und daß ein den Streifencode identisch wiedergebendes elektronisches Ausgangssignal gewonnen wird.

2. Verfahren nach Anspruch 1, dadurch gekennzeichnet, daß das Meß-Wechselfeld weitab vom Streifencode auf Null kompensiert wird.

3. Verfahren nach Anspruch 2, dadurch gekennzeichnet, daß ein durch den Streifencode praktisch nicht beeinflußbares Referenzfeld detektiert und das Meß-Wechselfeld mit diesem auf Null abgeglichen wird.

4. Verfahren nach Anspruch 2, dadurch gekennzeichnet, daß das Meß-Wechselfeld rein elektronisch auf Null kompensiert wird.

5. Verfahren nach einem der Ansprüche 1 bis 4, dadurch gekennzeichnet, daß über einem Streifencode in festem Abstand senkrecht zur Erstreckung der Einzelstreifen nebeneinander mehrere Erregerfelder erzeugt und Meß-Wechselfeldsignale abgenommen werden.

6. Verfahren nach Anspruch 4, dadurch gekennzeichnet, daß im Multiplex-Verfahren die Erregerfelder erzeugt und die Meß-Wechselfelder abgegriffen werden.

7. System bestehend aus einer Lesevorrichtung (34) und einem Codeträger (1, 2) zum Lesen von durch Material unterschiedlicher elektromagnetischer Eigenschaften codierter Information mittels eines elektromagnetischen Wechselfeldes, das durch das Material unterschiedlicher elektromagnetischer Eigenschaften beeinflußt wird, mit mindestens einer auf wenigstens einem Magnetkern (12, 12a, 12b, 23, 24, 26) aufsitzenden Erregerspule (13) sowie mit mindestens einer Sensorspule (14, 16) zur Detektion eines durch das elektromagnetische Material beeinflußten Meß-Wechselfeldes, wobei der Codeträger (1) einen Code aus leitfähigem para- oder diamagnetischen Material trägt, in dem Wirbelströme erzeugbar sind, die das Meß-Wechselfeld gegenüber dem ausgesandten Magnetfeld schwächen, dadurch gekennzeichnet, daß die zu lesende Information durch einen Streifencode (2) aus in unterschiedlichen Abständen (6, 7) angeordneten Streifen (3, 4) des leitfähigen, para- oder diamagnetischen Materials unterschiedlicher Breite codiert ist, daß eine Einrichtung (34-98) zur Detektion und Verarbeitung des durch die Streifencodes (2) geschwächten Meß-Wechselfelds mit den Breiten der Streifen (3, 4) und ihren Abständen (6, 7) unterschiedlicher Intensität zur Gewinnung eines den Streifencode (2) identisch wiedergebenden elektronischen Signals mit der Sensorspule (14, 16) verbunden ist und daß Erreger- und Sensorspule (13, 14, 16) mindestens auf dem gleichen Magnetkern (12, 12a, 12b, 23, 24, 26) aufsitzen und damit auf der gleichen Seite des elektromagnetischen Materials angeordnet sind.

8. System nach Anspruch 7, dadurch gekennzeichnet, daß auf dem Magnetkern (12) sowohl eine Meß- als auch eine Referenzspule (14, 16) als Sensorspulen (14, 16) aufgebracht sind.

9. System nach Anspruch 7 oder 8, dadurch gekennzeichnet, daß der Magnetkern (12) H-förmig ausgebildet ist und die Erregerspule (13) auf dem H-Steg angeordnet ist, während die Sensorspule(n) (14, 16) auf H-Schenkeln (18, 19) angeordnet ist (sind).

10. System nach einem der Ansprüche 7 bis 9, dadurch gekennzeichnet, daß der Magnetkern (12a, 12b) sich zumindest zum einen Ende benachbarter Schenkel (18, 19) A-förmig verjüngt, wobei zwischen den Spitzen der Schenkel (18, 19) ein Zwischenraum freigelassen ist.

11. System nach Anspruch 10, dadurch gekennzeichnet, daß der H-Magnet (12b) sich vom Steg (22) zu seinen beiden freien Enden der Schenkel hin verjüngt.

12. System nach Anspruch 10 oder 11, dadurch gekennzeichnet, daß die durch benachbarte Schenkel (18, 19) gebildete Stirnseite (21) einen mit einem Schlitz (17) versehenen Kreis bildet.

13. System nach einem der Ansprüche 7, 8 und 10 bis 12, dadurch gekennzeichnet, daß der Magnetkern (26) E-förmig ausgebildet ist und die Wicklungen der Spulen (13, 14, 16) aus Schenkeln (27, 28, 28a) des E-Magnetkerns (26) angeordnet sind.

14. System nach einem der Ansprüche 7 bis 13, dadurch gekennzeichnet, daß die Spulen (13, 14, 16) am Magnetkern (12, 26) verklebt sind.

15. System nach einem der Ansprüche 7 bis 12, gekennzeichnet durch Parallelschaltung von Kapazitäten zu den Spulen (13, 14, 16).

16. System nach einem der Ansprüche 7 bis 15, gekennzeichnet durch eine Einrichtung zum Nullabgleich der Meßspannung.

17. System nach einem der Asnprüche 8 bis 16, dadurch gekennzeichnet, daß Referenz- und Meßspule (14, 16) gegensinnig in Reihe geschaltet sind.

18. System nach einem der Ansprüche 7 bis 17, gekennzeichnet durch in Reihe geschalteten Phasenschieber und Differenzverstärker (43, 44).

19. System nach einem der vorangehenden Ansprüche, gekennzeichnet durch eine Einrichtung zur Spitzenwertdetektion (53, 54, 56, 57, 58, 59) mit nachgeschaltetem Flip-Flop (61).

20. Codeträger (1) für durch Material unterschiedlicher elektromagnetischer Eigenschaften codierte Information mit Bereichen unterschiedlicher elektromagnetischer Eigenschaften, von dem erste Bereiche (2) aus leitfähigem, para- oder diamagnetischen Material bestehen, dadurch gekennzeichnet, daß die zu lesende Information durch einen Streifencode (2) aus in unterschiedlichen Abständen (6, 7) angeordneten Streifen (3, 4) des leitfähigen, para- oder diamagnetischen Materials unterschiedlicher Breite codiert ist.

21. Codeträger nach Anspruch 20, dadurch gekennzeichnet, daß die Streifen (3, 4) durch eine Deckschicht (8) abgedeckt sind.

22. Codeträger nach einem der Ansprüche 20 oder 21, dadurch gekennzeichnet, daß Träger (1) und/oder Deckschicht (8) aus dielektrischem Material bestehen.

23. Codeträger nach Anspruch 20 oder 21, dadurch gekennzeichnet, daß Träger (1) und/oder Deckschicht (8) aus ferromagnetischem Material bestehen.

## Claims

1. Method for reading information encoded by material having different electromagnetic characteristics, an electromagnetic a.c. field being emitted and a magnetic field influenced by the material having different electromagnetic characteristics is detected, a code carrier with a code of conductive, paramagnetic or diamagnetic material being moved past a transmitting and detecting head and eddy currents are produced by the electromagnetic a.c. field in the conductive, paramagnetic or diamagnetic material, characterized in that a bar code of bars of the conductive, paramagnetic or diamagnetic material with different widths and predetermined, but different spacings is moved past the common transmitting and detecting head, that a magnetic field attenuated by the conductive, paramagnetic or diamagnetic material is measured as the measurement a.c. field with an intensity differing in accordance with the widths of the bars and their spacings and that an electronic output signal identically reproducing the bar code is obtained.

2. Method according to claim 1, characterized in that the measurement a.c. field is compensated to zero remotely from the bar code.

3. Method according to claim 2, characterized in that a reference field substantially uninfluenceable by the bar code is detected and the measurement a.c. field is zero balanced therewith.

4. Method according to claim 2, characterized in that the measurement a.c. field is purely electronically compensated to zero.

5. Method according to one of the claims 1 to 4, characterized in that several excitation fields are produced in juxtaposed manner via a bar code at a fixed interval perpendicular to the extension of the individual bars and measurement a.c. field signals are taken.

6. Method according to claim 4, characterized in that in the multiplexing process excitation fields are produced and measurement a.c. fields tapped.

7. System comprising a reader (34) and a code carrier (1, 2) for reading information encoded by material having different electromagnetic characteristics by means of an electromagnetic a.c. field, which is influenced by the material having different electromagnetic characteristics, having at least one excitation coil (13) placed on at least one magnet core (12, 12a, 12b, 23, 24, 26), as well as with at least one sensor coil (14, 16) for detecting a measurement a.c. field influenced by the electromagnetic material, the code carrier (1) carrying a code of conductive paramagnetic or diamagnetic material, in which eddy currents can be produced, which attenuate the measurement a.c. field compared with the emitted magnetic field, characterized in that the information to be read is encoded by a bar code (2) of bars (3, 4) of conductive, paramagnetic or diamagnetic material of different widths arranged at different spacings (6, 7), that a device (34-98) for detecting and processing of the measurement a.c. field attenuated by the bar code (2) with the widths of the bars (3, 4) and their spacings (6, 7) of different intensity for obtaining an electronic signal identically reproducing the bar code (2) is connected to the sensor coil (14, 16) and that the excitation and sensor coil (13, 14, 16) are placed on at least the same magnet core (12, 12a, 12b, 23, 24, 26) and therefore on the same side of the electromagnetic material.

8. System according to claim 7, characterized in that on the magnet core (12) are applied both a measurement and a reference coil (14, 16) as sensor coils (14, 16).

9. System according to claim 7 or 8, characterized in that the magnet core (12) is H-shaped and the excitation coil (13) is placed on the H-bar, whereas the sensor coil or coils (14, 16) are placed on the H-legs (18, 19).

10. System according to one of the claims 7 to 9, characterized in that the magnet core (12a, 12b) tapers in A-shaped manner at least towards one end of adjacent legs (18, 19), a gap being left free between the tips of the legs (18, 19).

11. System according to claim 10, characterized in that the H-magnet (12b) tapers from the bar (22) to its two free ends of the legs.

12. System according to claim 10 or 11, characterized in that the end face (21) formed by adjacent legs (18, 19) forms a circle provided with a slot (17).

13. System according to one of the claims 7, 8 and 10 to 12, characterized in that the magnet core (26) is E-shaped and the windings of the coils (13, 14, 16) are placed on legs (27, 28, 28a) of the E-magnet core (26).

14. System according to one of the claims 7 to 13, characterized in that the coils (13, 14, 16) are bonded to the magnet core (12, 26).

15. System according to one of the claims 7 to 12, characterized by the parallel connection of capacitors to the coils (13, 14, 16).

16. System according to one of the claims 7 to 15, characterized by a device for the zero balancing of the measurement voltage.

17. System according to one of the claims 8 to 16, characterized in that the reference and measurement coils (14, 16) are connected in opposition.

18. System according to one of the claims 7 to 17, characterized by a series-connected phase shifter and differential amplifier (43, 44).

19. System according to one of the preceding claims, characterized by a device for peak value detection (53, 54, 56, 57, 58, 59) with series-connected flip-flop (61).

20. Code carrier (1) for information encoded by material having different electromagnetic characteristics with areas having different electromagnetic characteristics, whereof first areas (2) are of conductive, paramagnetic or diamagnetic material, characterized in that the information to be read is encoded by a bar code (2) of bars (3, 4) of the conductive, paramagnetic or diamagnetic material of different widths arranged with different spacings (6, 7).

21. Code carrier according to claim 20, characterized in that the bars (3, 4) are covered by a covering layer (8).

22. Code carrier according to one of the claims 20 or 21, characterized in that the carrier (1) and/or covering layer (8) are made from dielectric material.

23. Code carrier according to claim 20 or 21, characterized in that the carrier (1) and/or covering layer (8) are made from ferromagnetic material.

## Revendications

1. Procédé pour la lecture d'informations codées dont le codage est réalisé à l'aide d'un matériau à caractéristiques électromagnétiques variables, dans lequel on émet un champ électromagnétique alternatif et on détecte un champ magnétique induit par le matériau à caractéristiques électromagnétiques variables, dans lequel on fait passer un support de code portant un code en matériau conducteur, para- ou diamagnétique devant une tête d'émission et de détection et on génère des courants de Foucault dans le matériau conducteur para- ou diamagnétique par l'intermédiaire du champ alternatif électromagnétique, caractérisé en ce qu'on fait passer un code à barres composé de barres disposées à intervalles prédéterminés, mais différents, et réalisées dans le matériau conducteur, para- ou diamagnétique de largeur variable, devant la tête d'émission et de détection, en ce qu'on mesure un champ magnétique atténué par le matériau conducteur para- ou diamagnétique en tant que champ alternatif de mesure avec les largeurs des barres et leurs intervalles d'intensité correspondante différente, et en ce qu'on obtient un signal électronique de sortie reproduisant le code à barres à l'identique.

2. Procédé selon la revendication 1, caractérisé en ce qu'à distance éloignée du code à barres, le champ alternatif de mesure se trouve compensé à zéro.

3. Procédé selon la revendication 2, caractérisé en ce que l'on détecte un champ de référence qui n'est pratiquement pas influençable par le code à barres et en ce qu'on égalise à zéro ce champ avec le courant alternatif de mesure.

4. Procédé selon la revendication 2, caractérisé en ce qu'on compense électroniquement à zéro le champ alternatif de mesure.

5. Procédé selon l'une quelconque des revendications 1 à 4, caractérisé en ce que l'on créé plusieurs champs d'excitation au-dessus d'un code à barres à distance fixe et perpendiculairement à la direction des barres individuelles et en ce que l'on reçoit des signaux de champ alternatif de mesure.

6. Procédé selon la revendication 4, caractérisé en ce que dans le procédé de multiplexage, on créé les champs d'excitation et l'on acquiert les champs alternatifs de mesure.

7. Ensemble consistant en un dispositif de lecture (34) et un support de code (1,2) pour la lectures d'informations codées par un matériau à caractéristiques électromagnétiques variables au moyen d'un champ alternatif électromagnétique influencé par le matériau à caractéristiques électromagnétiques variables, comportant au moins une bobine d'excitation (13) reposant sur au moins un noyau d'aimant (12,12a,12b,23,24,26) ainsi qu'au moins une bobine de détection (14,16) pour la détection d'un champ alternatif de mesure induit par le matériau électromagnétique, le support de code (1) portant un code en matériau conducteur para- ou diamagnétique, dans lequel on peut générer des courants de Foucault qui affaiblissent le champ alternatif de mesure par rapport au champ magnétique émis, caractérisé en ce que les informations à lire sont codées par un code à barres (2) constitué de barres (3,4) de largeurs différentes, réalisées dans le matériau conducteur para- ou diamagnétique et disposées à intervalles variables (6,7), en ce qu'un dispositif (34-98) de détection et de traitement du champ alternatif de mesure affaibli par les codes à barres (2) à largeurs de codes (3,4) et à intervalles (6,7) d'intensité différente est relié à la bobine de détection (14,16) pour obtenir un signal électronique reproduisant à l'identique le code à barres (2), et en ce que les bobines d'excitation et de détection (13,14,16) reposent au moins sur le même noyau magnétique (12,12a,12b,23,24,26) et sont ainsi disposées du même côté sur le matériau électromagnétique.

8. Ensemble selon la revendication 7, caractérisé en ce qu'une bobine de mesure ainsi qu'une bobine de référence (14,16) sont disposées sur le noyau magnétique (12) pour servir de bobines de détection (14,16).

9. Ensemble selon l'une quelconque des revendications 7 ou 8, caractérisé en ce que le noyau magnétique (12) est conformé en "H" et en ce que la bobine d'excitation est disposée sur la traverse du "H", tandis que la ou les bobine(s) de détection (14,16) est ou sont disposée(s) sur les branches du "H" (18,19).

10. Ensemble selon l'une quelconque des revendications 7 à 9, caractérisé en ce que le noyau magnétique (12a,12b) se rétrécit en forme de "A" au moins en direction d'une extrémité des branches voisines (18,19), un espace libre étant ménagé entre les pointes des branches (18,19).

11. Ensemble selon la revendication 10, caractérisé en ce que l'aimant (12b) en forme de "H" se rétrécit à partir de la traverse (22) vers les deux extrémités libres des branches.

12. ensemble selon l'une quelconque des revendications 10 ou 11, caractérisé en ce que la face frontale (21) formée par des branches voisines (18,19) forme un cercle comportant une fente (17).

13. Ensemble selon l'une quelconque des revendications 7, 8 et 10 à 12, caractérisé en ce que le noyau magnétique (26) est conformé en "E" et en ce que les enroulements des bobines (13,14,16) sont disposés sur des branches (27,28,28a) de l'aimant en forme de "E" (26).

14. Ensemble selon l'une quelconque des revendications 7 à 13, caractérisé en ce que les bobines (13,14,16) sont collées sur le noyau magnétique (12,26).

15. Ensemble selon l'une quelconque des revendications 7 à 12, caractérisé par un montage de condensateurs en dérivation par rapport aux bobines (13,14,16).

16. Ensemble selon l'une quelconque des revendications 7 à 15, caractérisé par un dispositif pour la compensation à zéro de la tension de mesure.

17. Ensemble selon l'une quelconque des revendications 8 à 16, caractérisé en ce que les bobines de référence et de mesure (14,16) sont montées en série tête bêche.

18. Ensemble selon l'une quelconque des revendications 7 à 17, caractérisé par le montage en série de déphaseurs et d'amplificateurs différentiels (43,44).

19. Ensemble selon l'une quelconque des revendications précédentes, caractérisé par un dispositif de détection des valeurs de crête (53,54,56,57,58,59) suivi en série d'un flip-flop (61).

20. Support de code (1) pour des informations codées par un matériau à caractéristiques électromagnétiques variables, comportant des zones à caractéristiques électromagnétiques variables, dont des premières zones (2) sont réalisées en un matériau conducteur para- ou diamagnétique, caractérisé en ce que les informations à lire sont codées par un code à barres (2) consistant en des barres (3,4) disposées à intervalles (6,7) variables réalisées dans le matériau conducteur para- ou diamagnétique de largeur variable.

21. Support de code selon la revendication 20, caractérisé en ce que les barres (3,4) sont couvertes par une couche de recouvrement (8).

22. Support de code selon l'une quelconque des revendications 20 ou 21, caractérisé en ce que le support (1) et/ou la couche de recouvrement (8) sont réalisés dans un matériau diélectrique.

23. Support de code selon l'une quelconque des revendications 20 ou 21, caractérisé en ce que le support (1) et/ou la couche de recouvrement (8) sont réalisés dans un matériau ferromagnétique.
